# FASCICULE DE BREVET EUROPEEN

(11) **EP 0 691 714 B1**
(45) Date de publication et mention de la délivrance du brevet: **08.03.2000**
(21) Numéro de dépôt: 95401619.2
(22) Date de dépôt: 05.07.1995
(51) Int. Cl.: H01R 35/04, G01P 3/44

(54) **Dispositif de connexion pour capteur d'informations associé à un roulement et procédé de montage d'un moyeu de roue équipé d'un tel dispositif de connexion**
Verbindungsvorrichtung für einen Sensor eines Wälzlager und Montage einer Radnabe versehen mit einer solchen Verbindungsvorrichtung
Connection device for a sensor in a bearing and mounting of a wheel hub comprising such a connection device

(30) Priorité: 08.07.1994 FR 9408453
(43) Date de publication de la demande: 10.01.1996
(73) Titulaire: SKF FRANCE, F-92140 Clamart (FR)
(72) Inventeur: Blond, Alejandro, 31500 Tudela, Navarra (ES)
(74) Mandataire: Casalonga, Axel

(56) Documents cités:
- EP-A- 0 521 789
- DE-A- 3 203 520
- FR-A- 2 639 482
- GB-A- 583 199

## Description

La présente invention concerne le domaine des roulements, tels que les roulements à billes ou à rouleaux, équipés d'un capteur d'informations intégré, ainsi que la connexion électrique de tels capteurs d'informations. L'invention s'applique plus particulièrement à des montages de moyeux de roues de véhicules dans lesquels un roulement est logé dans le moyeu de roue et comporte un élément capteur solidaire de la bague non tournante du roulement et un élément codeur solidaire de la bague tournante du roulement.

Il est connu d'intégrer à un roulement de moyeu de roue, un capteur d'informations pour détecter par exemple la vitesse de rotation instantanée de la roue du véhicule et utiliser cette information dans un dispositif de freinage avec anti-blocage de roues (ABS).

Un des problèmes techniques à résoudre dans ce domaine réside dans la liaison électrique entre le capteur d'informations intégré au roulement et l'unité centrale de traitement du signal située dans le véhicule à une certaine distance dudit roulement.

FR-A-2 639 482 révèle une connexion électrique pour capteurs sur paliers. Cette connexion est réalisée grâce à une bague qui est adjointe axialement et agencée coaxialement au palier. La bague comporte, à son tour, des bagues collectrices à contact glissant qui sont agencées radialement l'une au-dessus de l'autre et qui coopèrent avec des contacts d'un capteur solidarisé au palier. Pour chacune des bagues collectrices un fil de raccordement va à un câble de raccordement allant à une électronique de commande.

On connaît par la demande de brevet français FR-A-2 678 692 un roulement équipé d'un capteur d'informations intégré. Le capteur d'informations est constitué d'un élément codeur solidaire de la bague tournante du roulement et d'un bloc capteur solidaire de la bague non tournante du roulement. Le bloc capteur est réalisé en une seule pièce moulée avec un élément capteur intégré et un connecteur sous forme d'un tige faisant saillie radialement vers l'extérieur. L'extrémité libre de la tige constitue la tête du connecteur sur laquelle vient s'enficher un câble souple de connexion lié à l'unité centrale de traitement du signal du véhicule. Dans ce type de montage, le bloc capteur avec son connecteur intégré est d'abord monté sur le roulement qui est ensuite introduit axialement dans le moyeu de roue.

Dans la pratique cependant, il n'est pas toujours possible de monter dans un moyeu de roue un roulement muni d'un bloc capteur comportant un connecteur radialement en saillie par rapport au diamètre extérieur du roulement. C'est le cas par exemple d'un montage de moyeu de roue non motrice de véhicule muni d'un système de frein à tambour dans lequel le roulement est monté dans un moyeu solidaire du tambour de frein. Le tambour de frein est coiffé par un plateau de frein qui supporte le mécanisme de freinage et qui est solidaire du porte-fusée. Dans cette application particulière, le roulement est d'abord monté dans le moyeu, l'immobilisation axiale du roulement dans le moyeu étant assuré d'un côté par un circlips et de l'autre côté par un épaulement radial du moyeu. L'ensemble formé par le roulement et le moyeu est ensuite monté sur la fusée où il est immobilisé axialement au moyen d'un écrou. Il est donc impossible d'introduire dans le moyeu de roue le roulement préalablement muni d'un bloc capteur avec un connecteur ou tout autre organe de sortie du signal, faisant radialement saillie par rapport au diamètre extérieur du roulement.

On pourrait éventuellement envisager de monter le bloc capteur muni du connecteur en saillie radiale après que le roulement ait été mis en place dans le montage final de l'ensemble moyeu/roulement sur la fusée et contre le porte-fusée. Mais un tel montage est difficilement réalisable dans la mesure où il est fait "en aveugle". En effet, le connecteur est enfermé, durant le montage, dans un espace délimité par le moyeu/tambour et par le plateau de frein. Il est donc particulièrement difficile d'assurer le positionnement angulaire correct du connecteur sur du bloc capteur par rapport au porte-fusée et au plateau de frein de manière à ce que le connecteur débouche au bon endroit.

On connaît par ailleurs par la demande de brevet français FR-A-2 625 777 un bloc capteur monté axialement sur la fusée entre le porte-fusée et le moyeu pourvu du roulement et de l'élément codeur. Le bloc capteur comporte un élément de support annulaire faisant saillie radialement par rapport à la bague extérieure du roulement, ainsi qu'un câble de connexion qui traverse de façon étanche le plateau de frein. Cependant, le montage indépendant du bloc capteur et de l'élément codeur rend aléatoire l'intervalle axial qui les sépare après le montage de l'ensemble, car cet intervalle dépend des tolérances de fabrication et de montage. Cela signifie qu'il est difficile de garantir pour cette technique l'efficacité du fonctionnement du capteur d'informations qui, de surcroît, ne présente pas de moyens d'étanchéité efficaces pour le protéger du milieu extérieur.

Dans la pratique, les constructeurs d'automobiles préfèrent souvent utiliser un roulement équipé d'un capteur d'informations dont le bon fonctionnement a été préalablement testé. Ainsi, il suffit d'effectuer le montage du roulement ainsi équipé dans le moyeu de roue et ensuite sur la fusée correspondante du véhicule. Ensuite, il suffit d'assurer la connexion électrique entre le capteur d'informations et l'unité centrale de traitement du signal du véhicule. Or des systèmes conventionnels utilisés jusqu'à présent ne sont pas toujours satisfaisants pour des raisons exposées ci-dessus.

La présente invention a pour objet de résoudre ce problème technique à l'aide d'un dispositif de connexion particulièrement simple destiné au capteur d'informations intégré dans un roulement.

L'invention a également pour objet de simplifier le montage de l'ensemble formé par le capteur d'informations, le roulement, le moyeu de roue, la fusée et le porte-fusée du véhicule.

L'invention a en outre pour objet de permettre le montage "en aveugle" du moyeu de roue sur la fusée sans nécessité d'orientation angulaire particulière dudit moyeu.

Le dispositif de connexion pour capteur d'informations associé à un roulement, selon l'invention, telle que revendiquée, comporte deux parties pouvant venir s'imbriquer axialement l'une dans l'autre sans orientation angulaire relative:
- un bloc capteur annulaire solidaire d'une partie non tournante du roulement et abritant l'élément capteur proprement dit, ledit bloc capteur comportant également des premiers moyens de connexion électrique;
- un bloc de connexion lié à une partie non tournante du véhicule, tel que le porte-fusée situé à l'extrémité du bras de suspension et/ou le plateau de frein, ledit bloc de connexion comportant un corps annulaire pourvu de seconds moyens de connexion électrique coopérant de façon amovible avec les premiers moyens de connexion électrique, et un organe de sortie du signal.

De préférence, l'organe de sortie du signal du bloc de connexion est constitué par un connecteur situé à l'extrémité d'une tige radiale issue du corps annulaire du bloc de connexion, ledit connecteur permettant la connection électrique avec un câble souple transportant le signal jusqu'à l'unité centrale de traitement du signal.

On pourrait également envisager qu'à la place d'une tige rigide formant connecteur, le bloc de connexion comporte un câble souple formant connecteur issu de façon indémontable du bloc de connexion.

Selon un mode particulier de réalisation de l'invention, les premiers moyens de connexion électrique sont réalisés sous forme de deux couronnes circulaires concentriques en métal conducteur. Chaque couronne conductrice se présente sous la forme d'un cylindre à parois minces et est reliée électriquement en permanence avec l'élément capteur proprement dit du bloc capteur. Les seconds moyens de connexion électrique faisant partie du bloc de connexion peuvent être réalisés sous forme d'au moins deux clips métalliques, chacun situé dans une rainure circulaire axiale du bloc de connexion. La connexion électrique entre le bloc capteur et le bloc de connexion s'effectue par l'introduction axiale des deux couronnes circulaires conductrices du bloc capteur dans les deux rainures circulaires axiales du bloc de connexion, les clips métalliques venant pincer les couronnes métalliques après introduction axiale de celles-ci dans les rainures correspondantes de façon à établir le contact électrique entre les deux blocs. Bien évidemment, il est possible que les couronnes conductrices soient solidaires du bloc de connexion tandis que les rainures circulaires munies de clips conducteurs sont aménagées sur la partie annulaire du bloc capteur.

On peut ainsi, lors de la séquence de montage chez le constructeur d'automobiles, mettre en place le bloc de connexion sur le porte-fusée en orientant angulairement la tête de connexion (ou la sortie de câble de connexion si le câble est directement issu du bloc de connexion) par rapport au porte-fusée de telle sorte que le câble électrique de liaison puisse suivre un cheminement prédéterminé entre le bloc de connexion et l'unité centrale de traitement du signal du véhicule. Il est possible par exemple de faire sortir le connecteur ou le câble de connexion par une lumière aménagée dans le plateau de frein afin de faciliter la connexion électrique avec l'unité centrale de traitement du signal. Après la mise en place du bloc de connexion, on peut alors monter sur la fusée, le moyeu-tambour dans lequel on a préalablement monté le roulement équipé de l'élément codeur et du bloc capteur. Lors du rapprochement axial du bloc capteur avec le bloc de connexion, les couronnes conductrices viennent s'engager dans les rainures circulaires axiales correspondantes et dans les clips métalliques pour réaliser ainsi la connexion électrique des deux blocs sans qu'aucune orientation angulaire relative à ces deux blocs soit nécessaire. Ainsi, on peut réaliser cette phase du montage "en aveugle" et sans précaution particulière. Une fois l'ensemble solidarisé axialement au moyen d'un écrou vissé à l'extrémité libre de la fusée, on peut réaliser sans difficulté la liaison électrique entre le bloc de connexion et l'unité centrale de traitement du signal.

De préférence, on utilise des moyens d'étanchéité pour protéger le connexions électriques de tous risques de pénétration d'eau ou de pollutions diverses provenant du milieu extérieur.

L'invention sera mieux comprise et d'autres avantages apparaîtront dans la description détaillée d'un mode de réalisation pris à titre d'exemple nullement limitatif et illustré par les dessins annexés, sur lesquels :

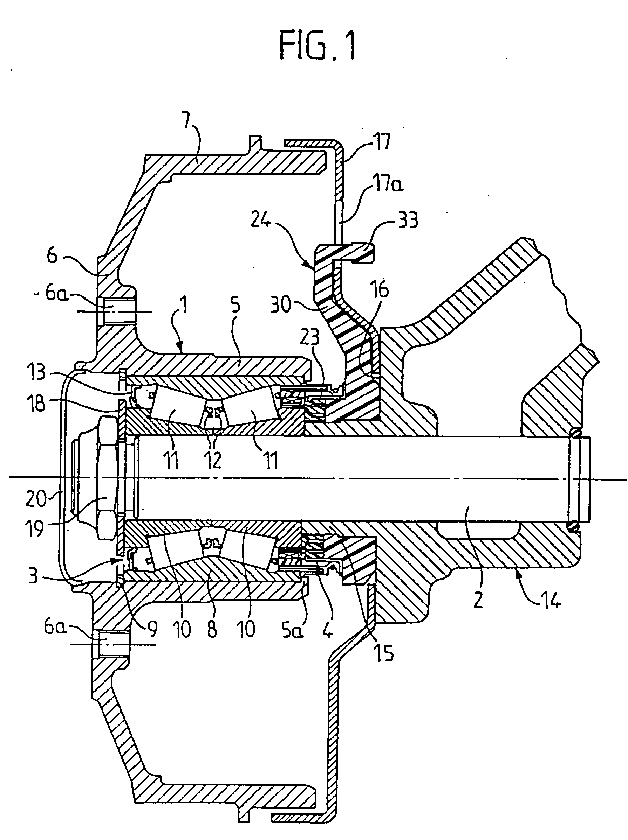

la figure 1 est une vue schématique en coupe axiale d'un ensemble équipé d'un dispositif de connexion selon l'invention,
la figure 2 est une vue de détail du dispositif de connexion selon la figure 1,
la figure 3 est une vue axiale du bloc de connexion de la figure 1, et
la figure 4 est une vue axiale du bloc de connexion qui représente une variante par rapport à la figure 3.

Comme illustré sur les figures qui concernent une application particulière de l'invention, sur une roue non motrice de véhicule, un moyeu de roue 1 est monté sur une fusée 2 par l'intermédiaire d'un roulement 3 qui est équipé d'un capteur d'informations intégré 4. Le moyeu de roue 1 présente une partie intérieure 5 s'étendant axialement et sous forme d'un cylindre creux, une partie formant collet radial 6 situé à une des extrémités de la partie cylindrique intérieure 5 et s'étendant radialement vers l'extérieur, et une partie cylindrique extérieure 7 de forme tubulaire faisant corps avec le rebord circonférentiel extérieur du collet radial 6 et s'étendant axialement de façon concentrique et dans la même direction que la partie cylindrique intérieure 5 du moyeu de roue 1.

Le collet radial 6 du moyeu de roue 1 présente des trous taraudés 6a répartis circonférentiellement de façon régulière pour permettre le montage d'une roue non représentée au moyen de vis et d'écrous non représentés. La partie cylindrique extérieure 7 du moyeu de roue 1 constitue le tambour de frein pour la roue correspondante. La partie cylindrique intérieure 5 du moyeu de roue 1 reçoit intérieurement le roulement 3 dont la bague extérieure 8 est fixée axialement entre un épaulement radial intérieur 5a de la partie cylindrique intérieure 5 du moyeu 1 et un circlips 9 monté dans une gorge circulaire intérieure de la partie circulaire intérieure 5 du moyeu 1.

Le roulement 3 comporte entre sa bague extérieure 8 et sa bague intérieure 10 en deux parties côte à côte axialement, deux rangées d'éléments roulants 11 sous forme de rouleaux (ou de billes) qui sont régulièrement espacés circonférentiellement par une cage annulaire 12. L'étanchéité des éléments roulants 11 du roulement 3 vis-à-vis du milieu extérieur est assurée par les bagues extérieure 8 et intérieure 10, un joint d'étanchéité d'extrémité 13 et le capteur d'informations 4 situés à une extrémité du roulement 3 pour former en même temps un moyen d'étanchéité pour le roulement.

La fusée 2 sous forme cylindrique est supportée par un porte-fusée 14 qui est constitué par une partie d'extrémité d'un bras de suspension du véhicule. Le porte-fusée 14 présente une portée d'extrémité 15 sensiblement tubulaire et une surface radiale d'appui 16 sur laquelle est monté un plateau de frein 17 au moyen de vis non représentées. Le plateau de frein 17 réalisé à partir d'une tôle métallique présente une forme de cuvette circulaire dont le bord extérieur est plié axialement pour entourer extérieurement et avec un faible jeu radial une extrémité libre du tambour de frein 7, ce qui permet d'éviter que les projections extérieures ne puissent rentrer directement dans l'espace intérieur du moyeu de roue 1. Le roulement 3 est monté par l'intermédiaire de sa bague intérieure 10 sur la fusée 2, la bague intérieure 10 étant bloquée axialement contre l'extrémité libre de-la portée axiale 15 du porte-fusée 14 au moyen d'un écrou 19 qui est vissé sur l'extrémité filetée de la fusée 2 et d'une rondelle 18. Un capot de protection 20 est emmanché axialement dans une extrémité du moyeu de roue 1 protégeant ainsi le roulement 3 des projections diverses extérieures.

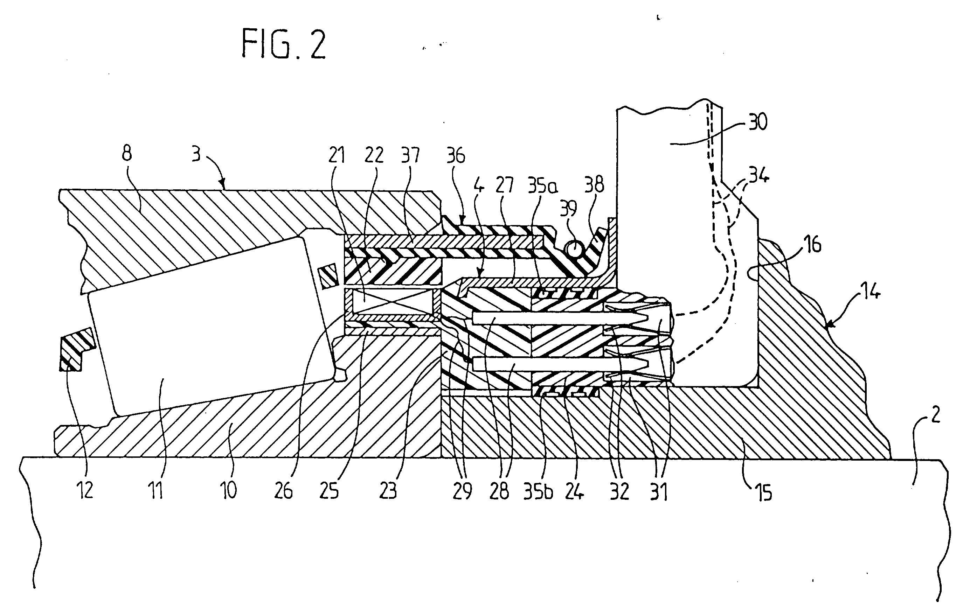

Comme illustré plus précisément sur la figure 2, le capteur d'informations 4 présente un élément capteur 21 solidarisé à la bague intérieure 10 du roulement 3, et un élément codeur 22 fixé sur la bague extérieure 8 du roulement 3. S'agissant d'un montage pour roue non motrice, la bague intérieure 10 du roulement 3 est non tournante. La bague extérieure 8 du roulement 3 solidaire du moyeu de roue 1 est tournante en fonctionnement, car elle est entraînée en rotation par la roue correspondante non représentée. Il en résulte que la rotation de la roue du véhicule entraîne la rotation de l'élément codeur 22 qui défile devant l'élément capteur 21 fixe avec un faible entrefer pour créer un signal alternatif dans l'élément capteur 21 représentatif de la vitesse de rotation de la roue correspondante.

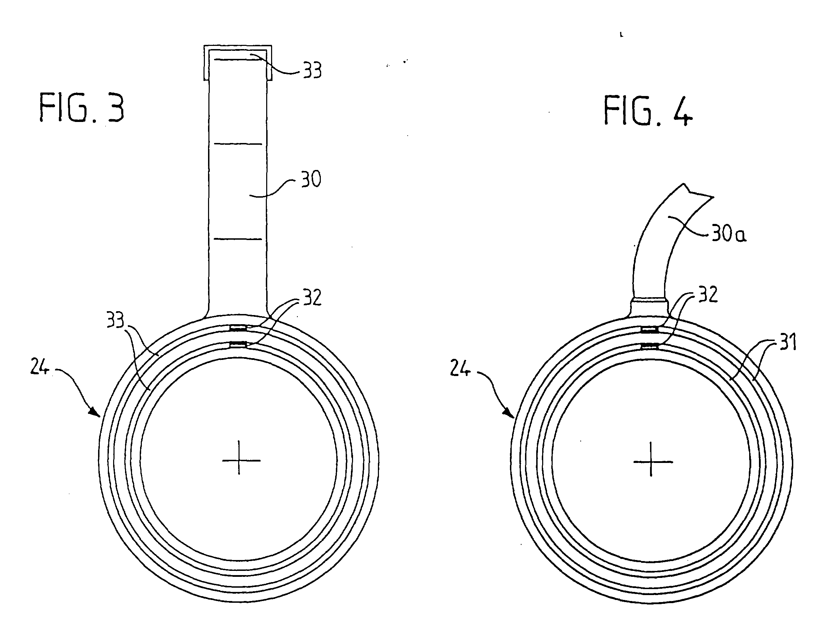

Le dispositif de connexion pour le capteur d'informations 4 comporte un bloc capteur 23 dont l'élément capteur 21 fait partie intégrante, et un bloc de connexion 24 assurant de façon amovible la connexion électrique entre le bloc capteur 23 et l'unité centrale de traitement du signal non représentée du véhicule. Le bloc capteur 23 dans cet exemple est obtenu par surmoulage d'une matière plastique isolante électriquement sur un insert métallique 25 tubulaire, un concentrateur de flux magnétique 26 sous forme annulaire de section en U dans lequel se trouve l'élément capteur 21 sous forme de bobine, un flasque métallique 27 annulaire d'étanchéité, et deux couronnes métalliques annulaires 28 concentriques s'étendant axialement et reliées électriquement à l'élément capteur 21 par des fils électriques 29. Le bloc de connexion 24 est également réalisé en matière plastique isolante électriquement présentant une partie annulaire de connexion et un bras radial 30. La partie annulaire du bloc de connexion 24 présente deux rainures circulaires concentriques 31 s'étendant axialement et dont le fond comporte au moins deux clips métalliques 32, chacun étant destiné à réaliser le contact électrique par pincement mécanique sur l'épaisseur de l'une des couronnes métalliques annulaires 28 du bloc capteur 23 Le bras radial 30 se termine par un connecteur 33 qui est relié électriquement aux clips métalliques 32 de connexion par des fils électriques 34 noyés dans la matière plastique du bloc de connexion 24. Au lieu du bras radial 30, le bloc de connexion 24 peut présenter un câble électrique souple 30a dont une extrémité est fixée à demeure à la partie annulaire de connexion et dont l'autre extrémité comporte le connecteur (figures 3 et 4).

Avantageusement, des joints d'étanchéité statiques 35a, 35b de forme annulaire sont disposés entre la partie annulaire du bloc de connexion 24 et les organes radialement adjacents. Ces joints évitent toute rentrée d'eau au niveau de la connexion entre le bloc capteur et le bloc de connexion.

Avant solidarisation axiale entre le bloc capteur 23 et le bloc de connexion 24, le joint 35a est monté serré sur le diamètre extérieur de la partie annulaire du bloc de connexion 24 et le joint 35b est monté serré sur la portée annulaire 15 du porte fusée.

L'élément codeur 22 peut être réalisé sous forme d'un anneau multipolaire à aimantation axiale dont la polarité est alternée dans le sens circonférentiel. Ainsi la rotation de l'élément codeur 22 entraîne une variation de champ magnétique dans la bobine 21 via le concentrateur de flux 26 dont une branche au moins présente des dents circonférentielles de largeur sensiblement identique à la largeur d'un pôle magnétique. L'élément codeur 22 fait partie d'un bloc codeur 36 qui comporte en outre un insert métallique tubulaire 37 et une lèvre d'étanchéité annulaire 38 intégrée. Un ressort 39 maintient le contact circonférentiel entre la lèvre d'étanchéité annulaire 38 du bloc codeur 36 avec le flasque annulaire d'étanchéité 27 du bloc capteur 23.

Grâce à l'invention, on peut simplifier le montage de l'ensemble de moyeu de roue 1 par rapport à la fusée 2 en supprimant la nécessité d'une orientation angulaire relative. Le montage peut être effectué de la façon suivante :
- fixation du bloc capteur 23 et du bloc codeur 36 par emmanchement axial des inserts métalliques 25 et 37 respectivement sur la bague intérieure non tournante 10 et la bague extérieure tournante 8 avec les deux couronnes métalliques concentriques 28 faisant saillie axialement;
- montage du roulement par emmanchement axial dans la partie intérieure cylindrique 5 du moyeu de roue 1 jusqu'à ce qu'il soit en butée axiale contre l'épaulement radial 5a;
- fixation du circlips 9 dans la gorge circonférentielle intérieure de la partie intérieure cylindrique 5 pour bloquer axialement le roulement 3 dans le moyeu de roue 1;
- fixation par vis du plateau de frein 17 sur la surface radiale 16 du porte fusée 14, le plateau de frein 17 étant pourvu d'une ouverture 17a;
- emmanchement du bloc de connexion 24 sur la portée cylindrique 15 du porte-fusée 14 jusqu'à ce qu'il soit en butée axiale contre la surface radiale 16 du porte-fusée 14, le bras radial 30 du bloc de connexion présentant une forme telle qu'il ne puisse pas gêner ce mouvement d'emmanchement axial, le connecteur 33 passant axialement au travers de l'ouverture 17a du plateau de frein 17;
- emmanchement axial du moyeu de roue 1 pourvu du roulement 3 sur la fusée 2 jusqu'à ce que le flasque annulaire d'étanchéité 27 du bloc capteur 23 soit en butée axiale contre le bras radial 30 du bloc de connexion 24, les couronnes métalliques tubulaires concentriques 28 du bloc capteur 23 entrant dans les deux rainures annulaires axiales 31 du bloc de connexion 24 pour coopérer avec les clips métalliques 32 de connexion électrique du bloc de connexion 24;
- introduction axiale de la rondelle 18 et serrage de l'écrou de fixation 19 à l'extrémité libre de la fusée 2 pour assurer la fixation axiale du moyeu de roue 1 sur la fusée 2;
- emmanchement axial de la cache de protection 20 dans l'extrémité libre du moyeu de roue 1.

Selon l'invention, il n'est pas nécessaire d'effectuer d'orientation angulaire déterminée pour le montage de l'ensemble, grâce aux couronnes annulaires métalliques 28 du bloc capteur 23 et des clips métalliques de connexion 32 du bloc de connexion 24. Le capteur d'informations 4 et la connexion électrique entre le bloc capteur 23 et le bloc de connexion 24 sont bien protégés par les moyens d'étanchéité 38, 35a et 35b. On comprendra également que le choix de l'élément capteur 21 et de l'élément codeur 22 n'est pas primordial pour l'invention qui concerne essentiellement les connexions électriques entre l'élément capteur 21 et l'unité centrale de traitement du signal du véhicule ainsi que le procédé de montage du moyeu de roue équipé du dispositif de l'invention.

## Revendications

1. Dispositif de connexion pour capteur d'informations (4) associé à un roulement (3), ce dispositif comprenant un bloc capteur annulaire (23) solidaire d'une partie non tournante (10) du roulement et abritant l'élément capteur (21) du capteur d'informations et présentant des premiers moyens (28) de connexion électrique, et un bloc de connexion (24) coopérant avec des moyens d'étanchéité (35a, 35b) et présentant une partie annulaire de connexion électrique munie de seconds moyens (32) de connexion électrique, lesdits blocs pouvant venir s'imbriquer axialement l'un dans l'autre sans orientation angulaire relative pour assurer le contact électrique entre eux par l'intermédiaire des premiers et seconds moyens de connexion électrique .

2. Dispositif de connexion selon la revendication 1, caractérisé en ce que les premiers moyens de connexion électriques sont constitués par deux couronnes annulaires (28) concentriques et s'étendant axialement, et que la partie annulaire de connexion du bloc de connexion (24) présente deux rainures circulaires (31) concentriques s'étendant axialement et dont le fond comporte au moins un clip métallique (32) pour coopérer avec les couronnes annulaires concentriques (28) emmanchées axialement dans les rainures annulaires axiales, les clips métalliques constituant les seconds moyens de connexion électrique.

3. Dispositif de connexion selon la revendication 1 ou 2, caractérisé en ce que le bloc de connexion (24) présente un bras radial (30) ou un câble souple (30a) dont l'extrémité libre constitue le connecteur (33) et est reliée électriquement aux clips métalliques (32) par des fils conducteurs (34).

4. Dispositif de connexion selon l'une des revendications précédentes, caractérisé en ce que des joints d'étanchéité statiques (35a, 35b) sont disposés entre la partie annulaire du bloc de connexion (24) et les organes radialement adjacents.

5. Dispositif de connexion selon la revendication 4, caractérisé en ce que le bloc capteur (23) présente un flasque annulaire d'étanchéité (27) coopérant d'une part avec une lèvre d'étanchéité (38) d'un bloc codeur (36) du capteur d'informations (4) et d'autre part avec le joint d'étanchéité tubulaire extérieure (35a) du bloc de connexion (24).

6. Procédé d'assemblage d'un moyeu de roue (1) équipé d'un capteur d'informations (4) sur une fusée (2) d'un véhicule, ce procédé consistant à :
- intégrer à un roulement (3) un bloc codeur (36) sur sa bague extérieure (8) et un bloc capteur (23) sur la bague intérieure (10), le bloc capteur comportant deux couronnes annulaires (28) concentriques s'étendant axialement,
- fixer la bague extérieure (8) du roulement (3) ainsi équipé dans une partie cylindrique intérieure (5) d'un moyeu de roue (1),
- emmancher un bloc de connexion (24) sur une portée axiale cylindrique (15) du porte-fusée (14), le bloc de connexion (24) présentant deux rainures annulaires concentriques (31) s'étendant axialement, le fond de chaque rainure présentant au moins un clip métallique (32) de connexion électrique,
- emmancher axialement le moyeu de roue (1) pourvu du roulement (3) sur la fusée (2) jusqu'à ce que la bague intérieure (10) du roulement soit en butée axiale contre le porte-fusée (14), les couronnes annulaires concentriques (28) du bloc capteur (23) entrant axialement dans les rainures concentriques axiales (31) du bloc de connexion (24) de façon à ce que les clips métalliques (32) coopèrent mécaniquement avec les couronnes annulaires (28) pour assurer une connexion électrique entre le bloc capteur et le bloc de connexion,
- fixer axialement le moyeu de roue (1) autour de la fusée (2).

## Patentansprüche

1. Verbindungsanordnung für einen einem Lager (3) zugeordnete Informationsaufnehmer (4),
mit einem ringförmigen Aufnehmerkörper (23), der an einem nicht-drehenden Teil (10) des Lagers befestigt ist, das Aufnehmerelement (21) des Informationsaufnehmers beherbergt sowie erste elektrische Anschlussmittel (28) aufweist, und
mit einem Kupplungskörper (24), der mit Dichtmitteln (35a,35b) zusammenwirkt und einen ringförmigen, elektrischen Anschlussbereich aufweist, der mit zweiten elektrischen Anschlussmitteln (32) versehen ist,
wobei die Körper ohne besondere winkelmäßige Orientierung axial zusammenzubringen sind, um den elektrischen Kontakt zwischen den ersten und den zweiten Anschlussmitteln herzustellen.

2. Verbindungsanordnung nach Anspruch 1, dadurch gekennzeichnet, dass die ersten Anschlussmittel von zwei konzentrischen und sich axial erstreckenden kreisringförmigen Hülsen (28) gebildet sind, und dass der ringförmige Verbindungsteil des Kupplungskörpers (24) zwei zueinander konzentrische und sich axial erstreckende Ringnuten (31) enthält, deren Boden jeweils wenigstens einen Metallklipp (32) trägt, der mit den zueinander konzentrischen kreisringförmigen Hülsen zusammenwirkt, die in die axialen Ringnuten (28) in axialer Richtung eintauchen, wobei die Metallklipps die zweiten elektrischen Verbindungsmittel darstellen.

3. Verbindungsanordnung nach Anspruch 1 oder 2, dadurch gekennzeichnet, dass der Kupplungskörper (24) einen radial sich erstreckenden Arm (30) oder ein biegsames Kabel (30a) aufweist, dessen freies Ende den Verbinder (33) bildet und der an die Metallklipps (32) über elektrische Leitungen (34) elektrisch angeschlossen ist.

4. Verbindungsanordnung nach einem der vorhergehenden Ansprüche, dadurch gekennzeichnet, dass die statischen Dichtungsverbindungen (35a,35b) zwischen dem ringförmigen Teil des Kupplungskörpers (24) und den benachbarten, radial sich erstreckenden Teilen angeordnet ist.

5. Verbindungsanordnung nach Anspruch 4, dadurch gekennzeichnet, dass der Aufnehmerköper (23) einen ringförmigen Dichtungsflansch (37) aufweist, der einerseits mit einer Dichtlippe (38) eines Kodierelementes (36) des Informationsaufnehmers (4) und andererseits mit einer ringförmigen äußeren Dichtung (35a) des Kupplungskörpers (24) zusammenwirkt.

6. Verfahren zur Montage einer mit einem Informationsaufnehmer (4) versehenen Radnabe (1) auf einer Fahrzeugachse (2), wobei es zu dem Verfahren gehört:
- dass bei einem Lager (3) auf dessen Außenring ein Kodierteil (36) und auf dessen Innenring (10) ein Aufnehmerkörper (23) vorgesehen wird, wobei der Aufnehmerkörper (23) zwei kreisringförmige Hülsen (28) aufweist, die zueinander konzentrisch sind und sich in axialer Richtung erstrecken,
- dass auf dem so ausgestatteten Außenring (8) des Lagers (3) ein innerer zylindrischer Teil (5) der Radnabe (1) befestigt wird,
- dass auf einer axialen, zylindrischen Sitzfläche (15) eines Achszapfenträgers (14) ein Kupplungskörper (24) aufgesteckt wird, wobei der Kupplungskörper(24) zwei zueinander konzentrische Ringnuten (31) aufweist, die sich in axialer Richtung erstrecken und der Boden jeder Ringnut wenigstens einen elektrischen Metallanschlussklipp (32) trägt,
- dass die Radnabe (1), die mit dem Lager (3) versehen ist, auf den Achszapfen (2) aufgesteckt wird, bis der Innenring (10) des Lagers in axialer Richtung gegen den Achszapfenträger (14) anstößt, die zueinander konzentrischen kreisringförmigen Hülsen (28) des Aufnehmerkörpers (23) in axialer Richtung in die zueinander konzentrischen axialen Nuten (31) des Kupplungskörpers (24) in der Weise eindringen, dass die Metallklipps (32) mechanisch mit den kreisringförmigen Hülsen (28) zusammenwirken, um eine elektrische Verbindung zwischen dem Aufnehmerkörper und dem Kupplungskörper herzustellen, und
- dass die Radnabe (1) auf der Achse (2) axial gesichert wird.

## Claims

1. Connection device for an information sensor (4) associated with a rolling bearing (3), this device comprising an annular sensor block (23) secured to a non-rotating part (10) of the bearing and housing the sensor element (21) of the information sensor and having first means (28) of electrical connection, and a connection block (24) collaborating with sealing means (35a, 35b) and having an annular part for electrical connection equipped with second means (32) of electrical connection, it being possible for the said blocks to nest together axially one inside the other without relative angular orientation in order to provide electrical contact between them via the first and second means of electrical connection.

2. Connection device according to Claim 1, characterized in that the first means of electrical connection consist of two concentric annular rings (28) extending axially, and in that the annular connection part of the connection block (24) has two concentric circular grooves (31) extending axially, and the bottom of which contains at least one metallic clip (32) for collaborating with the concentric annular rings (28) push-fitted axially into the axial annular grooves, the metallic clips constituting the second means of electrical connection.

3. Connection device according to Claim 1 or 2, characterized in that the connection block (24) has a radial arm (30) or a flexible cable (30a), the free end of which constitutes the connector (33) and is connected electrically to the metallic clips (32) by conducting wires (34).

4. Connection device according to one of the preceding claims, characterized in that static seals (35a, 35b) are positioned between the annular part of the connection block (24) and the radially adjacent components.

5. Connection device according to Claim 4, characterized in that the sensor block (23) has an annular sealing shroud (27) collaborating, on the one hand, with a sealing lip (38) of an encoder block (36) of the information sensor (4) and, on the other hand, with the outer tubular seal (35a) of the connection block (24).

6. Method for assembling a wheel hub (1) equipped with an information sensor (4) on a stub axle (2) of a vehicle, this method consisting in:
- building into a rolling bearing (3), on its outer ring (8) an encoder block (36) and, on the inner ring (10), a sensor block (23), the sensor block comprising two concentric annular rings (28) extending axially,
- fixing the outer ring (8) of the bearing (3) thus equipped into an inner cylindrical part (5) of a wheel hub (1),
- push-fitting a connection block (24) onto a cylindrical axial bearing surface (15) of the stub axle carrier (14), the connection block (24) having two concentric annular grooves (31) extending axially, the bottom of each groove containing at least one metallic clip (32) for electrical connection,
- axially push-fitting the wheel hub (1) equipped with the rolling bearing (3) onto the stub axle (2) until the inner ring (10) of the bearing is in axial abutment against the stub axle carrier (14), the concentric annular rings (28) of the sensor block (23) axially entering the axial concentric grooves (31) of the connection block (24) such that the metallic clips (32) collaborate mechanically with the annular rings (28) to provide an electrical connection between the sensor block and the connection block,
- axially securing the wheel hub (1) around the stub axle (2).
